# EUROPÄISCHE PATENTSCHRIFT

(11) **EP 4 685 589 B1**
(45) Veröffentlichungstag und Bekanntmachung des Hinweises auf die Patenterteilung: **24.06.2026**
(21) Anmeldenummer: 24191150.2
(22) Anmeldetag: 26.07.2024
(51) Int. Cl.: G05B 19/042

(54) **VIRTUELLES SCHILD FÜR EINE BESCHILDERUNG EINER KOMPONENTE EINER INDUSTRIELLEN ANLAGE**
VIRTUAL SIGN FOR A SIGNAGE OF A COMPONENT OF AN INDUSTRIAL INSTALLATION
PANNEAU VIRTUEL POUR SIGNALISATION DE COMPOSANT D'INSTALLATION INDUSTRIELLE

(43) Veröffentlichungstag der Anmeldung: 28.01.2026
(73) Patentinhaber: MPA Technology GmbH, 57299 Burbach (DE)
(72) Erfinder: Klein, Timo, 35745 Herborn (DE)
(74) Vertreter: Bösherz Goebel Patentanwälte

(56) Entgegenhaltungen:
- EP-A1- 4 109 185
- US-A1- 2021 092 780
- US-A1- 2022 365 506

## Beschreibung

Die vorliegende Erfindung betrifft ein Verfahren für eine Beschilderung einer Komponente einer industriellen Anlage.

### Stand der Technik

Industrie 4.0 hat eine Revolution in der Art und Weise eingeläutet, wie Unternehmen ihre Fertigungsprozesse steuern und optimieren können. Ein wichtiger Bestandteil dieser Revolution ist die Einführung digitaler Zwillinge, die virtuelle Replikate physischer Anlagen und Produkte darstellen. Diese digitalen Modelle ermöglichen es, die Produktion oder Produktionsprozesse in Echtzeit zu überwachen, zu analysieren und zu verbessern, indem sie eine präzise und detaillierte Darstellung der realen Welt bieten. Trotz der Vorteile, die digitale Zwillinge bieten, stehen Unternehmen vor Herausforderungen wie der Integration von Daten aus verschiedenen Quellen, der Sicherstellung der Datensicherheit und des Datenschutzes sowie der Bewältigung von Komplexität und Interoperabilität. Darüber hinaus erfordert der erfolgreiche Einsatz digitaler Zwillinge ein tiefgreifendes Verständnis der zugrunde liegenden Technologien sowie Investitionen in Schulung und Fachkräfte, um ihr volles Potenzial auszuschöpfen.

EP 4 109 185 A1 offenbart eine Bedien- und Anzeigeeinheit für ein Feldgerät. Die Einheit weist eine Darstellungseinheit eingerichtet zu einer kodierten Darstellung einer Identifikation des Feldgeräts auf.

US 2021/0092780 A1 offenbart ein Feldgerät mit einem Controller, der ein grafisches Display steuert, auf dem maschinenlesbare Codes angezeigt werden können.

US 2022/0365506 A1 offenbart ein Verfahren zur Aktivierung oder Deaktivierung von Hardware- und/oder Software-Funktionalitäten in Automatisierungskomponenten.

Es ist daher eine Aufgabe der vorliegenden Erfindung, die voranstehend beschriebenen Nachteile zumindest teilweise zu beheben. Insbesondere ist es Aufgabe der vorliegenden Erfindung, die Verwendung von konventionellen Schildern oder Beschilderungen zu reduzieren, sowie die Instandhaltung von Anlagen einfacher und effizienter ausführen zu können. Ferner ist es Aufgabe der vorliegenden Erfindung die Verwendung von betrieblichen Daten und Informationen einer industriellen Anlage weiter zu verbessern.

### Offenbarung der Erfindung

Gegenstand der Erfindung ist ein Verfahren mit den Merkmalen des Anspruchs 1. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen virtuellen Schild beschrieben sind, selbstverständlich auch im Zusammenhang mit dem erfindungsgemäßen Verfahren, und jeweils umgekehrt, so dass bezüglich der Offenbarung der Erfindung stets auch eine wechselseitige Bezugnahme möglich ist.

Insbesondere kann ein virtuelles Schild für eine Beschilderung einer Komponente einer industriellen Anlage in einer realen Welt vorgesehen sein, umfassend:
- ein virtuelles Element, welches so angepasst ist, dass es wenigstens eine technische Information bezüglich der Komponente der industriellen Anlage in Echtzeit bereitstellt, wobei das virtuelle Element auf einer Augmented Reality-Oberfläche optisch überlagernd zu der Komponente in der realen Welt anordbar ist,
- wenigstens eine Schnittstelle zu einer Servereinrichtung, wobei die Servereinrichtung einen digitalen Zwilling von Komponenten der industriellen Anlage in der realen Welt umfasst,
wobei die wenigstens eine technische Information eine virtuelle Kennzeichnung für eine jeweilige betrachtete Komponente umfasst, wobei die virtuelle Kennzeichnung als wenigstens ein interaktives Element für eine Interaktion eines Benutzers mit dem virtuellen Schild ausgebildet ist.

Dies hat den Vorteil, dass ein Benutzer über die technische Information der Komponenten in Echtzeit verfügen und diese direkt auf der Augmented Reality-Oberfläche sehen kann. Die Integration des digitalen Zwillings mit der realen Welt ermöglicht eine direkte Zuordnung von virtuellen Schildern zu den physischen Komponenten einer industriellen Anlage. Durch interaktive Elemente innerhalb der wenigstens einen technischen Information, insbesondere innerhalb der virtuellen Kennzeichnung kann der Benutzer mit dem System interagieren, z.B. detailliertere Informationen abrufen, Bestellungen auslösen oder Wartungsanforderungen einreichen. Mit anderen Worten, ermöglicht es die virtuelle Beschilderung von Komponenten einer Anlage über eine Augmented Reality-Benutzeroberfläche dem Benutzer, technische Informationen über die verschiedenen Komponenten der Anlage abzurufen und sie in Echtzeit zu identifizieren. Durch den Abgleich mit den hinterlegten Positionsinformationen kann eine schnelle und genaue Identifizierung von Komponenten erreicht werden. Die virtuelle Beschilderung ersetzt physische Schilder an einer Komponente einer Anlage, was den Aufwand und die Reaktionszeit für die Identifizierung von Komponenten deutlich reduziert. Ferner ermöglicht dies dem Benutzer, den Zustand der technischen Elemente und Komponenten in Echtzeit zu überwachen und sich einen Überblick über den Zustand der Anlage machen. Durch die interaktive Oberfläche kann der Benutzer auch Änderungen an der Anlage vornehmen, ohne dass physische Eingriffe notwendig sind. Die virtuelle Beschilderung und die Servereinrichtung können ferner als Plattform für den Austausch von Informationen beispielsweise zwischen verschiedenen Teams und Benutzern dienen. So können z.B. Wartungsteams, Instandhaltungs- und Optimierungsteammitglieder in Echtzeit Informationen austauschen und die Anlage effizienter warten und instand halten.

Der Begriff "digitaler Zwilling" ist so zu verstehen, dass ein digitaler Zwilling eine virtuelle Repräsentanz eines Objekts der realen Welt darstellt. Der digitale Zwilling ermöglicht dabei einen Datenaustausch zwischen dem Objekt der realen Welt und virtuellen Systemen Es kann weiter möglich sein, dass die virtuelle Kennzeichnung einen maschinenlesbaren Code aufweist und/oder dass das wenigstens eine interaktive Element als ein virtueller Knopf ausgebildet ist, welcher einen Zugriff auf weitere Informationen bezüglich der digitalen Kennzeichnung über die wenigstens eine Schnittstelle bereitstellt, insbesondere einen Typ der Komponente und/oder eine Betriebsmittelkennzeichnung und/oder eine Herstellerinformation und/oder Konstruktionsdaten und/oder Wartungsanweisungen und/oder Ersatzteilinformationen und/oder eine Verbindung zu einem Bestellsystem.

Es ist somit möglich, dass die virtuelle Kennzeichnung beispielsweise einen QR-Code enthält, der mit einem Smartphone oder Tablet oder einem anderen Detektionsgerät gescannt werden kann. Der Scan führt dann auf eine detaillierte Informationsplattform, die den Typ der Komponente, Betriebsmittelkennzeichnung, Herstellerinformation, Konstruktionsdaten, Wartungsanweisungen oder Ersatzteilinformationen bereitstellt. Ferner wird zudem eine Verbindung zu einem Bestellsystem vorteilhafterweise ermöglicht bzw. bereitstellt. Die virtuelle Kennzeichnung kann auch einen virtuellen Knopf aufweisen, der durch Berührung oder Sprache aktiviert wird und auf zusätzliche Informationen über die digitale Kennzeichnung zugreift. Mit anderen Worten ermöglicht der maschinenlesbare Code eine einfache und schnelle Identifizierung der Komponente, während das virtuelle KnopfElement eine interaktive Verbindung zum Server herstellt, um weitere Informationen abzurufen. Dies ermöglicht dem Benutzer, leicht auf die erforderlichen Informationen zuzugreifen, wenn er beispielsweise die Betriebsmittelkennzeichnung oder Herstellerinformation benötigt.

Außerdem ist es von Vorteil, wenn die wenigstens eine technische Information für die jeweilige betrachtete Komponente der industriellen Anlage zusätzlich eine virtuelle Statusanzeige und/oder eine virtuelle Zustandsüberwachungsfunktionsanzeige umfasst.

Es ist somit möglich, dass das virtuelle Schild neben technischen Informationen auch den aktuellen Betriebsstatus einer Komponente anzeigt. Die virtuelle Statusanzeige kann beispielsweise durch Farbcodes oder grafische Symbole visualisiert werden. Darüber hinaus kann der virtuelle Schild eine virtuelle Zustandsüberwachungsfunktionsanzeige beinhalten, die den Benutzer über potenzielle Störungen oder Abweichungen informiert. Durch den Einsatz einer virtuellen Beschilderung kann der Benutzer vorteilhafterweise nicht nur Informationen über die verschiedenen Komponenten der Anlage abrufen, sondern auch in Echtzeit den Zustand und die Position der einzelnen Komponenten verfolgen.

Des Weiteren ist es denkbar, dass die virtuelle Statusanzeige einen Gesamt-Status der Komponente in Abhängigkeit einer Störung und/oder Abweichung in unterschiedlichen Farben umfasst und/oder die virtuelle Statusanzeige als ein zweites interaktives Element für eine Anzeige von weiteren Statusinformationen ausgebildet ist.

Damit wird der Vorteil erzielt, dass der Benutzer den Zustand einer Komponente auf einen Blick erfassen kann. Durch die Verwendung unterschiedlicher Farben zur Darstellung des Gesamtstatus wird eine schnellere und intuitive Identifizierung von Störungen oder Abweichungen ermöglicht. Das zweite interaktive Element in der virtuellen Statusanzeige bietet dem Benutzer zudem die Möglichkeit, detailliertere Informationen zu erhalten, falls erforderlich.

Außerdem kann es im Rahmen der Erfindung von Vorteil sein, dass die virtuelle Zustandsüberwachungsfunktionsanzeige eine Echtzeitüberwachung und Warnmeldungen bei abnormalen Zuständen der Komponente umfasst, und/oder die virtuelle Zustandsüberwachungsfunktionsanzeige als ein drittes interaktives Element für eine Anzeige von weiteren Informationen zu Zustandsüberwachungsdaten, insbesondere zu Prozessdaten, der Komponente der industriellen Anlage ausgebildet ist, wobei die weiteren Informationen mittels der Interaktion in einem weiteren virtuellen Element bereitstellbar sind. Somit kann das virtuelle Schild über eine Echtzeitüberwachung der Komponente verfügen und Warnmeldungen bei anormalen Zuständen auslösen und anzeigen. Optionale weitere Informationen zu Prozessdaten können durch Interaktion mit dem virtuellen Schild angezeigt werden.

Zudem ist im Rahmen der Erfindung denkbar, dass das virtuelle Schild wenigstens ein weiteres interaktives Element umfasst, welches dazu angepasst ist, dass einem Benutzer

Informationen hinsichtlich Aufgaben zur Ausführung und/oder Planung von Wartungsarbeiten, hinsichtlich einer Bestellung von Ersatzteilen, und/oder hinsichtlich einer Einsicht in Wartungsprotokolle in einem anderen virtuellen Element bereitgestellt werden. Mit anderen Worten wird durch das virtuelle Schild eine umfassendere Interaktion mit der industriellen Anlage ermöglicht. Der Benutzer kann über das interaktive Element nicht nur Informationen zur Komponente einsehen, sondern auch Aufgaben zur Ausführung und/oder Planung von Wartungsarbeiten abrufen, Ersatzteile bestellen oder auf Wartungsprotokolle zugreifen. Das vereinfacht die Kommunikation und Koordinierung rund um die industrielle Anlage und trägt zur Effizienzsteigerung bei.

Von weiterem Vorteil kann vorgesehen sein, dass das virtuelle Element so angepasst ist, dass es die wenigstens eine technische Information gleichzeitig oder zeitlich konfigurierbar, im Wechsel kontinuierlich nacheinander ausgibt.

Dadurch kann dem Benutzer ein umfassenderes Verständnis der technischen Informationen zu einer Komponente vermittelt werden, da er verschiedene technische Informationen beispielsweise hinsichtlich eines Verlaufs eines Betriebszustands in unterschiedlichen Zeiträumen oder Abfolgen angezeigt bekommt. Die zeitliche Konfiguration ermöglicht eine dynamische Darstellung von Daten und deren Entwicklungen. Der Wechsel zwischen den Informationsdatenpunkten kann die Aufmerksamkeit des Benutzers auf relevante Details lenken und einen besseren Überblick über komplexe technische Zusammenhänge ermöglichen.

Gegenstand der Erfindung ist ein Verfahren für eine virtuelle Beschilderung einer Komponente einer industriellen Anlage in einer realen Welt, umfassend die nachfolgenden Schritte:
- Bereitstellen eines digitalen Zwillings von Komponenten der industriellen Anlage in der realen Welt, wobei der digitale Zwilling als ein 2D und/oder 3D-Modell spezifiziert ist,
- Erkennen einer jeweiligen betrachteten Komponente der industriellen Anlage auf Basis des auf einer Servereinrichtung bereitgestellten digitalen Zwillings,
- Ausgeben eines erfindungsgemäßen virtuellen Schilds für die jeweilige betrachtete Komponente in Echtzeit mittels eines virtuellen Elements auf einer Augmented-Reality-Oberfläche eines Bediengeräts, um eine virtuelle Beschilderung der Komponente zu ermöglichen.

Damit bringt das erfindungsgemäße Verfahren die gleichen Vorteile mit sich, wie sie ausführlich mit Bezug auf das virtuelle Schild beschrieben worden sind. Ferner kann der Benutzer auf diese Weise die jeweilige Komponente in der realen Welt schnell und einfach identifizieren, da ein virtuelles Schild direkt über dem physischen Objekt angezeigt wird. Dies vereinfacht die Arbeit von Wartungspersonal, da sie keine Zeit mit manuellen Verzeichnissen oder Schildern verschwenden müssen. Ferner können durch die virtuelle Beschilderung relevante Informationen wie Betriebsanleitungen, Wartungsintervalle oder Sicherheitshinweise direkt am Komponentenort zugänglich gemacht werden, was zur Steigerung der Sicherheit und Effizienz beiträgt.

Vorteilhafterweise kann im Rahmen der Erfindung vorgesehen sein, dass das Verfahren die weiteren nachfolgenden Schritte umfasst:
- Zuordnen des virtuellen Schilds zu der erkannten Komponente auf Basis des entsprechenden digitalen Zwillings der erkannten Komponente,
- Bereitstellen eines virtuellen Schilds für die jeweilige betrachtete Komponente auf Basis des Zuordnens.

Dadurch kann eine direkte und eindeutige Verknüpfung zwischen dem virtuellen Schild und der realen Komponente hergestellt werden. Dies erhöht die Benutzerfreundlichkeit, da Mitarbeiter die relevanten Informationen schnell und präzise finden können. Die Zuordnung des virtuellen Schilds ermöglicht auch personalisierte Inhalte für verschiedene Nutzergruppen oder Anwendungsfälle.

Außerdem ist es von Vorteil, wenn das Verfahren den weiteren nachfolgenden Schritt umfasst:
- Bereitstellen von Informationen zu der industriellen Anlage und deren Komponenten über wenigstens eine Schnittstelle des virtuellen Schilds mittels wenigstens einem interaktiven Element.

Dies hat den Vorteil, dass die Bediener direkt auf relevante Informationen zu der betrachteten Komponente zugreifen können, ohne zusätzliche Schritte oder Geräte zu benötigen. Interaktive Elemente ermöglichen eine dynamische und intuitive Wissensvermittlung, welche das Verständnis der Anlage für komplexere Funktionen vereinfacht und so zu einer effizienteren Problemlösung beiträgt.

Optional kann es vorgesehen sein, dass das Verfahren wenigstens einen der weiteren nachfolgenden Schritte umfasst:
- Übertragen einer Position und/oder einer Ausrichtung des Bediengeräts bezüglich der industriellen Anlage an die Servereinrichtung, um eine Ausgabe des virtuellen Schilds zu ermöglichen,
- Auslösen einer Aktivität bezüglich der Komponente mittels einer Interaktion über das wenigstens eine interaktive Element des virtuellen Schilds.

Somit kann das Verfahren die Position und Ausrichtung des Bediengeräts in Relation zur industriellen Anlage an eine Servereinrichtung übermitteln. Diese Informationen werden zur präzisen Zuordnung des virtuellen Schilds verwendet, sodass das richtige virtuelle Schild für die jeweilige betrachtete Komponente angezeigt wird. Die Interaktion mit dem virtuellen Schild kann Aktivitäten bezüglich der Komponente auslösen, beispielsweise das Starten eines Wartungsvorgangs oder die Anzeige von detaillierten Informationen über die Komponente.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1:: zeigt eine schematische Darstellung für ein virtuelles Schild einer Komponente gemäß Ausführungsbeispielen der Erfindung,
- Fig. 2:: zeigt eine beispielhafte Darstellung der Erfindung
- Fig. 3: zeigt eine schematische Übersicht gemäß Ausführungsbeispielen der Erfindung,
- Fig. 4: zeigt ein weiteres Ausführungsbeispiel der Erfindung,
- Fig. 5: zeigt ein schematisches Beispiel für eine Darstellung eines ERP-Systems gemäß Ausführungsbeispielen der Erfindung, und
- Fig. 6: zeigt ein Verfahren gemäß Ausführungsbeispielen der Erfindung.

In den nachfolgenden Figuren werden für die gleichen technischen Merkmale auch von unterschiedlichen Ausführungsbeispielen die identischen Bezugszeichen verwendet.

Kern der Erfindung ist eine Augmented-Reality-Benutzeroberfläche, welche das reale Umfeld mit Anlagen / Maschinen oder sonstigen technischen Objekten / Elementen mit den entsprechenden digitalen Zwillingen überlagert und den Objekten ein virtuelles Schild umfassend technische Informationen wie eine Kennzeichnung, insbesondere eine Betriebsmittelkennzeichnung, beispielsweise in Form eines DMC- und/oder QR-Codes zuweist. Ferner kann vorgesehen sein, dass das virtuelle Schild eine Statusampel und eine Condition Monitoring Anzeige oder - Feld zuordnet.

Mittels dieser "zentralen" Informationsquelle bzw. Schnittstelle zwischen einer realen Komponente und einer Servereinrichtung, welche eine Datenbank umfassen kann, können neben allgemeinen technischen Daten bzw. Informationen bezüglich einer Komponente einer industriellen Anlage beispielsweise technische Informationen hinsichtlich ihrer aktuellen und zurückliegenden Betriebs- und Verschleißzustände und der daraus abgeleiteten notwendigen Handlungsszenarien bereitstellt werden. Ferner kann vorgesehen sein, dass durch eine Schnittstelle oder Anbindung an ein ERP-System, eine Möglichkeit zur Prüfung des aktuellen Lagerbestandes und einer eventuellen Neubeschaffung der Komponente bereitgestellt werden kann.

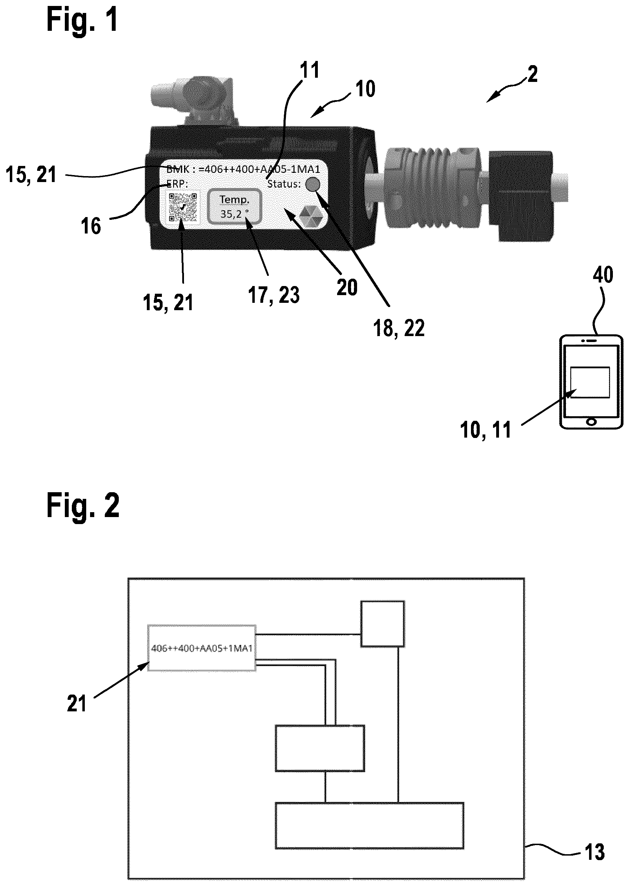

Fig. 1 stellt ein virtuelles Schild 10 für eine Komponente 2 in exemplarischer Form dar, wie es als virtuelles Element 11 auf einer Augmented Reality Oberfläche eines Bediengeräts 40 oder eines Ausgabegerätes ausgegeben werden kann.

Das virtuelle Element 11 kann verschiedene Bereiche bzw. Zonen umfassen, um unterschiedliche technische Informationen 20 für eine zu betrachtende Komponente 2 einer industriellen Anlage 1 bzw. technischen Systems 1 oder ein technisches Element einer industriellen Anlage 1 auszugeben oder anzuzeigen. Solche Informationen 20 können beispielsweise textliche Angaben, visuelle Anzeigen von Symbolen o.ä. sein. Dabei können z.B. eine oder mehrere Eigenschaften der Komponente 2 und/oder eine Kennzeichnung 21 oder Kennung 21 der Komponente 2 dargestellt werden. Ferner ist in Fig. 1 eine Statusanzeige 22 für die Komponente 2 und eine Zustandsüberwachungsanzeige 23 (Condition Monitoring) dargestellt. Das virtuelle Schild 10 kann wie in Fig. 1 abgebildet als technische Information 20 eine Kennzeichnung 21 bezüglich eines Typs oder einer Zuordnung zur Konstruktion oder eine Betriebsmittelkennzeichnung, einen DMC- oder QR-Code 21, eine Statusampel 22 und eine Anzeige 23 für das "Condition Monitoring" umfassen.

Wird das wenigstens eine interaktive Element 15 des virtuellen Schilds 10 für die Kennzeichnung 21 verwendet, d.h. beispielsweise berührt, öffnet sich z. B. ein weiteres virtuelles Element 13, 14, welches dann einen elektrischen Schaltplan der Anlage oder des Gesamtsystems wie in Fig. 2 abgebildet. Das weitere virtuelle Element 13 in Fig. 2 gibt dem Benutzer 5 unter Hervorhebung der jeweiligen betrachteten Komponente 2 eine detailliertere Ansicht in die Art und Weise der Verschaltung der Komponente 2. Ferner zeigt das virtuelle Schild 10 neben der Anzeige 23 komponentenspezifischer Betriebsdaten (hier Temperatur) über die Statusanzeige 22 den generellen Zustand der Komponente 2.

Die Statusampel 22 kann folgende Informationen anzeigen:
Grün: Fehlerfreie Funktion gewährleistet.
Gelb: Temporärer Fehler im Laufe der letzten X Zyklen aufgetreten oder Wartung/ Austausch in X Zyklen erforderlich.
Rot: Zustand Kritisch - akuter Handlungsbedarf/ Störung.

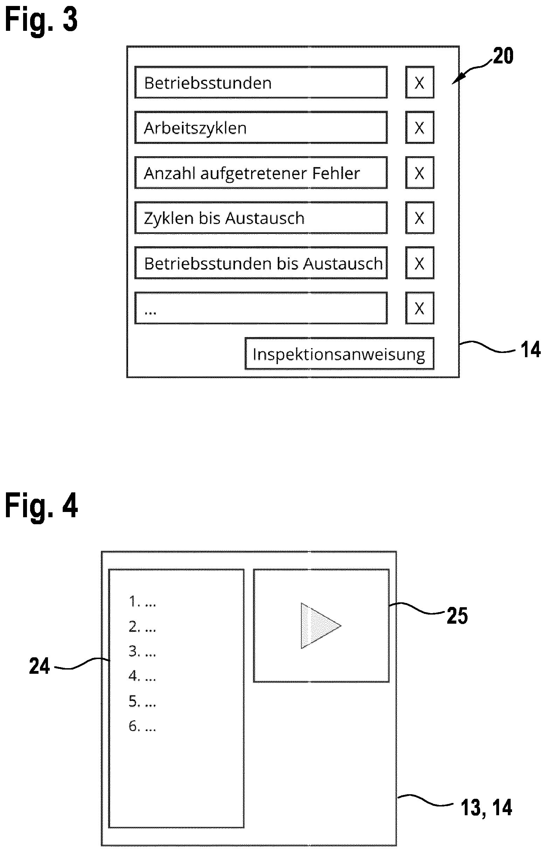

Die Zustandsüberwachungsanzeige 23 oder Condition-Monitoring-Anzeige 23 kann beispielsweise bei einem grünen oder gelben Status gemäß der vorgenannten Anzeige 22 weitere Informationen 20 z.B. in einem weiteren virtuellen Element 14 zur Historie der Komponente ausgeben wie als Beispiel in Fig. 3 dargestellt. Ferner kann eine Option vorgesehen sein z.B. über eine Aktivierung eines weiteren virtuellen Elements 14 eine Inspektionsanweisung mit weiterführenden Informationen zur Wartung der Komponente 2 abzurufen.

Im Falle eines Status "Rot" können z.B. detaillierte Informationen 20 zur Behebung des aktuellen Fehlers auf Basis ausgewerteter Daten abgerufen werden wie in Fig. 4 abgebildet. Optional kann vorgesehen sein, dass über das aktivierte weitere virtuelle Element 13, 14 Bild- 24 oder Videomaterial 25 zu unterstützenden Zwecken (Entstörungsmöglichkeiten) abgerufen werden kann.

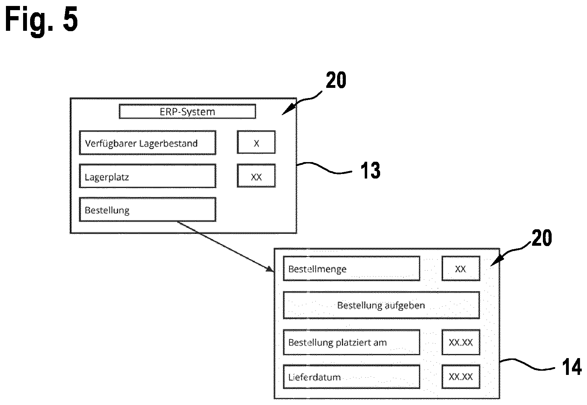

Ist ein Austausch der jeweiligen betrachteten Komponente 2 erforderlich, können über das interaktive Element "ERP" 16 des virtuellen Schilds 10 in Fig. 1 in Verbindung mit dem Bestellsystem aktuelle Lagerbestände eingesehen bzw. eine Ersatzbestellung in einem weiteren virtuellen Element 13, 14 initiiert werden wie beispielsweise in Fig. 5 abgebildet.

Die Kennzeichnung 21 kann den Typ des Sensors oder Aktors mit entsprechender Zuordnung zur elektrischen und mechanischen Konstruktion darstellen. Der DMC / QR Code selbst oder ein digitaler Button jeweils als interaktives Element 15, 16, 17, 18 ausgebildet, weist einen Link bzw. eine Verknüpfung über wenigstens eine Schnittstelle 12 zu einem Server 60 auf, welcher eine Datenbank mit weiteren Informationen, wie z.B. Konstruktionsdaten, Ersatzteilinformationen oder eine Verbindung zu einem Bestellsystem (ERP) umfassen kann. Dabei sieht der Benutzer 5 einen DMC / QR Code 21, 15 oder einen Button 15, welcher z.B. über eine Touchfunktion des Bildschirms des Bediengeräts 40 aktiviert oder angeklickt werden kann, um in das weitere virtuelle Element 13, 14 als beliebig gestaltbare Ansicht mit entsprechend weiterführenden Informationen und Funktionen zu gelangen und mit diesem zu interagieren.

Die Statusampel 22 kann mehrfarbig den Status der jeweiligen betrachteten Komponente 2 oder einer Baugruppe 2 oder eines technischen Elements 2 anzeigen. Störungen bzw. Abweichungen können damit schnell erkannt werden. Die notwendigen Informationen 20, 23 können über die Statusanzeige "Condition Monitoring" 23 ausgegeben werden. Durch Aktivieren des interaktiven Elements 17, 18 dieser Statusanzeige 23 kann der Benutzer beispielsweise detaillierte Prozessdaten aufrufen. Die Verwendung des jeweiligen interaktiven Elements 15, 16, 17, 18 wie z. B. der Statusampel 22 oder der Condition Monitoring Anzeige 23 führt direkt weiter zu Fehlermeldungen, zu kritischen Größen der Prozesslandschaft oder einfach zur Übersicht der im Monitoring befindlichen Daten. Die weitere Verknüpfung und die darin verbundenen Informationen können dabei beliebig mit weiteren Soft- und Hardware Systemen verbunden werden. Beispielweise ließe sich bei Fehlermeldungen eine Vorgehensweise in Form eines Tutorials oder einer Videoanleitung auf dem Server 60 hinterlegen. Bei der Anwendung der Erfindung könnte ein Ersatz für eine defekte Komponente 2 anhand des ausgegebenen virtuellen Schilds 10 und der dazugehörigen Zuordnung auf Basis des digitalen Zwillings direkt in einem Bestellsystem (ERP) geprüft und beschafft werden.

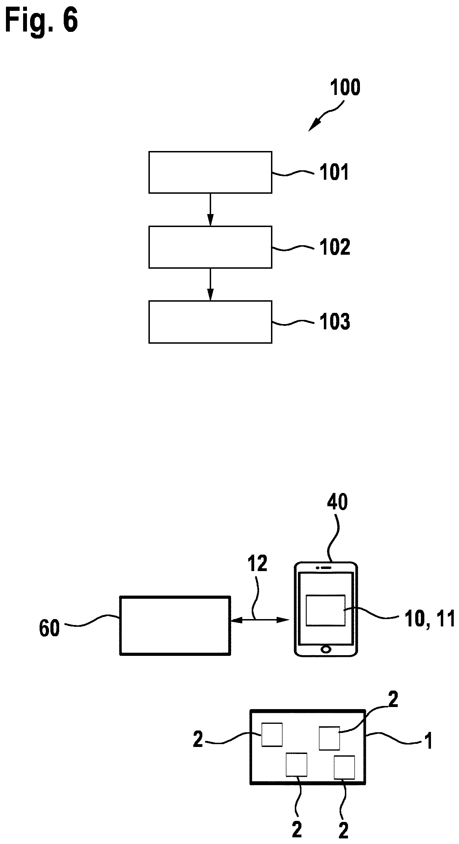

Fig. 6 zeigt ein Verfahren gemäß Ausführungsbeispielen der Erfindung. Insbesondere wird in Fig. 6 ein Verfahren 100 für eine virtuelle Beschilderung einer Komponente 2 einer industriellen Anlage 1 in einer realen Welt dargestellt. Das Verfahren 100 umfasst die nachfolgenden Schritte:
In einem Schritt 101 wird ein digitaler Zwilling von Komponenten 2 einer industriellen Anlage 1 in der realen Welt bereitgestellt. Dabei ist der digitale Zwilling als ein 2D und/oder 3D-Modell spezifiziert. In einem Schritt 102 wird eine jeweilige betrachtete Komponente 2 der industriellen Anlage 1 erkannt auf Basis des auf einer Servereinrichtung 60 bereitgestellten digitalen Zwillings. In Schritt 103 wird dann ein erfindungsgemäßes virtuelles Schild 10 für die jeweilige betrachtete Komponente 2 in Echtzeit ausgegeben mittels eines virtuellen Elements 11 auf einer Augmented-Reality-Oberfläche eines Bediengeräts 40, um eine virtuelle Beschilderung der Komponente 2 zu ermöglichen.

Ferner zeigt Fig. 6 in einer schematischen Darstellung eine Servereinrichtung 60, welche über wenigstens eine Schnittstelle 12 mit einem Bediengerät 40 verbunden ist. Ferner ist in Fig. 6 eine Anlage 1 umfassend mehrere Komponenten 2 abgebildet.

Mittels eines Erfassungsgeräts (nicht abgebildet), wie z.B. einem Smartphone, einem Tablet oder einer VR/AR Brille, können industrielle Anlagen 1 oder Maschinen oder sonstige technische Objekte / Elemente vorbereitend auf der Servereinrichtung 60 mit ihren technischen Informationen 20 in einer Datenbank angelegt werden. Mittels eines Lidar Scanners kann beispielsweise die Anlage 1 oder das Objekt als eine 3D Punktwolke angelegt werden. Dabei werden markante Punkte definiert und zur Orientierung genutzt. In einem weiteren Vorbereitungsschritt können dann die jeweiligen virtuellen Schilder 10 im erfassten und mit dem digitalen Zwilling verbundenen Raum den Komponenten 2 bzw. Baugruppen der Anlage 1 zugeordnet werden. Die virtuellen Schilder 10 sind dann in der Datenbank auf dem Server 60 und den darin befindlichen Daten und Algorithmen hinterlegt , verbunden und abrufbar.

Ein Bediengerät 40, insbesondere eine VR/AR-Brille, ein Smartphone oder ein Tablet, kann z.B. mittels Bilderkennung eine Komponente 2 der Anlage 1 auf Basis des hinterlegten digitalen Zwillings erkennen 102. Dabei kann die Erkennung in Abhängigkeit eines Abgleichs mit einem hinterlegten Bild der Komponente 2ausgeführt. Ferner werden geometrische Positionsdaten zum Abgleich der aktuellen Position des Bediengeräts 40 mit der Position zu der Komponente 2 mit den hinterlegten Positionsinformationen im digitalen Modell der Anlage 1 abgeglichen, um die jeweilige betrachtete Komponente 2 zu identifizieren und zuzuordnen. Ein Zugriff auf diese Daten erfolgt über eine Schnittstelle 12 an das Bediengerät 40. Ein Zugriff kann kabellos und/oder kabelgebunden über ein Netzwerk erfolgen.

Optional kann vorgesehen sein, dass in Abhängigkeit von einer jeweiligen Zugriffsberechtigung für einen Bediener 5 der Anlage, für einen Instandhalter, einem Wartungsbeauftragte, oder einem Administrator entsprechende interaktive Elemente 15, 16, 17, 18 in Abhängigkeit der Zugriffsberechtigung in dem virtuellen Element 11 des virtuellen Schilds 10 freigeschaltet oder gesperrt sind.

### Bezugszeichenliste

- 1: Anlage
- 2: Komponente
- 5: Benutzer

- 10: virtuelles Schild
- 11: virtuelles Element
- 12: Schnittstelle
- 13,14: weiteres virtuelles Element
- 15,16, 17,18: interaktives Element

- 20: technische Information
- 21: virtuelle Kennzeichnung
- 22: virtuelle Statusanzeige
- 23: virtuelle Zustandsüberwachungsfunktionsanzeige
- 24: Text, Bildmaterial
- 25: Videomaterial

- 40: Bediengerät

- 60: Servereinrichtung

- 100: Verfahren
- 101: Erster Verfahrensschritt
- 102: Zweiter Verfahrensschritt
- 103: Dritter Verfahrensschritt

## Patentansprüche

1. Verfahren (100) für eine virtuelle Beschilderung einer Komponente (2) einer industriellen Anlage (1) in einer realen Welt, umfassend die nachfolgenden Schritte:
- Bereitstellen (101) eines digitalen Zwillings von Komponenten (2) der industriellen Anlage (1) in der realen Welt, wobei der digitale Zwilling als ein 2D und/oder 3D-Modell spezifiziert ist,
- Erkennen (102) einer jeweiligen betrachteten Komponente (2) der industriellen Anlage (1) auf Basis des auf einer Servereinrichtung (60) bereitgestellten digitalen Zwillings, wobei das Verfahren (100) durch folgenden Schritt gekennzeichnet ist:
- Ausgeben (103) eines virtuellen Schilds (10) für die jeweilige betrachtete Komponente (2) in Echtzeit mittels eines virtuellen Elements (11) auf einer Augmented-Reality-Oberfläche eines Bediengeräts (40), um eine virtuelle Beschilderung der Komponente (2) zu ermöglichen,
wobei die Augmented-Reality-Oberfläche des Bediengeräts (40) als eine Augmented-Reality-Benutzeroberfläche spezifiziert ist, welche das reale Umfeld mit Anlagen / Maschinen oder sonstigen technischen Objekten / Elementen mit den entsprechenden digitalen Zwillingen überlagert und den Objekten das virtuelle Schild umfassend technische Informationen zuweist.

2. Verfahren (100) nach Anspruch 1,
**dadurch gekennzeichnet, dass** das Verfahren (100) die weiteren nachfolgenden Schritte umfasst:
- Zuordnen des virtuellen Schilds (10) zu der erkannten (102) Komponente (2) auf Basis des entsprechenden digitalen Zwillings der erkannten Komponente (2),
- Bereitstellen eines virtuellen Schilds (10) für die jeweilige betrachtete Komponente (2) auf Basis des Zuordnens.

3. Verfahren (100) nach einem der vorhergehenden Ansprüche,
**dadurch gekennzeichnet, dass** das Verfahren (100) den weiteren nachfolgenden Schritt umfasst:
- Bereitstellen von Informationen zu der industriellen Anlage (1) und deren Komponenten (2) über wenigstens eine Schnittstelle (12) des virtuellen Schilds (10) mittels wenigstens einem interaktiven Element (15, 16, 17, 18).

4. Verfahren nach einem der vorhergehenden Ansprüche,
**dadurch gekennzeichnet, dass** das Verfahren (100) wenigstens einen der weiteren nachfolgenden Schritte umfasst:
- Übertragen einer Position und/oder einer Ausrichtung des Bediengeräts (40) bezüglich der industriellen Anlage (1) an die Servereinrichtung (60), um eine Ausgabe (103) des virtuellen Schilds (10) zu ermöglichen,
- Auslösen einer Aktivität bezüglich der Komponente (2) mittels einer Interaktion über das wenigstens eine interaktive Element (15, 16, 17, 18) des virtuellen Schilds (10).

## Claims

1. Method (100) for virtual signage of a component (2) of an industrial plant (1) in a real world, comprising the following steps:
- Providing (101) a digital twin of components (2) of the industrial plant (1) in the real world, wherein the digital twin is specified as a 2D and/or 3D model,
- Detecting (102) a respective component (2) of the industrial plant (1) being viewed based on the digital twin provided on a server system (60), wherein the method (100) is **characterized by** the following step:
- Outputting (103) a virtual sign (10) for the respective component (2) being viewed in real time by means of a virtual element (11) on an augmented reality interface of a user device (40) to enable virtual signage of the component (2),
wherein the augmented reality interface of the user device (40) is specified as an augmented reality user interface that overlays the real environment with plants / machines or other technical objects / elements with the corresponding digital twins and assigns the virtual sign comprising technical information to the objects.

2. Method (100) according to claim 1,
**characterized in that** the method (100) comprises the following further steps:
- Assigning the virtual sign (10) to the detected (102) component (2) based on the corresponding digital twin of the detected component (2),
- Providing a virtual sign (10) for the respective component (2) being viewed based on the assignment.

3. Method (100) according to one of the preceding claims,
**characterized in that** the method (100) comprises the following further step:
- Providing information relating to the industrial plant (1) and its components (2) via at least one interface (12) of the virtual sign (10) by means of at least one interactive element (15, 16, 17, 18).

4. Method according to one of the preceding claims,
**characterized in that** the method (100) comprises at least one of the following further steps:
- Transmitting a position and/or an orientation of the user device (40) with respect to the industrial plant (1) to the server system (60), in order to enable output (103) of the virtual sign (10),
- Triggering an activity relating to the component (2) by means of an interaction via the at least one interactive element (15, 16, 17, 18) of the virtual sign (10).

## Revendications

1. Procédé (100) pour une signalisation virtuelle d'un composant (2) d'une installation industrielle (1) dans un monde réel, comprenant les étapes suivantes :
- Mise à disposition (101) d'un jumeau numérique de composants (2) de l'installation industrielle (1) dans le monde réel, ledit jumeau numérique étant spécifié comme modèle 2D et/ou 3D,
- Détection (102) d'un composant (2) respectivement considéré de l'installation industrielle (1) sur la base du jumeau numérique mis à disposition sur un dispositif serveur (60), le procédé (100) étant **caractérisé par** l'étape suivante :
- Affichage (103) d'un panneau virtuel (10) pour le composant (2) respectivement considéré en temps réel au moyen d'un élément virtuel (11) sur une interface de réalité augmentée d'un appareil de commande (40) pour permettre une signalisation virtuelle du composant (2),
dans lequel l'interface de réalité augmentée de l'appareil de commande (40) est spécifiée comme une interface utilisateur de réalité augmentée qui superpose l'environnement réel comportant des installations / machines ou d'autres objets / éléments techniques avec les jumeaux numériques correspondants et attribue aux objets le panneau virtuel comprenant des informations techniques.

2. Procédé (100) selon la revendication 1,
**caractérisé en ce que** le procédé (100) comprend les étapes supplémentaires suivantes :
- Affectation du panneau virtuel (10) au composant (2) détecté (102) sur la base du jumeau numérique correspondant du composant (2) détecté,
- Mise à disposition d'un panneau virtuel (10) pour le composant (2) respectivement considéré sur la base de l'affectation.

3. Procédé (100) selon l'une quelconque des revendications précédentes,
**caractérisé en ce que** le procédé (100) comprend l'étape supplémentaire suivante :
- Mise à disposition d'informations sur l'installation industrielle (1) et ses composants (2) par l'intermédiaire d'au moins une interface (12) du panneau virtuel (10) au moyen d'au moins un élément interactif (15, 16, 17, 18).

4. Procédé selon l'une quelconque des revendications précédentes,
**caractérisé en ce que** le procédé (100) comprend au moins une des étapes supplémentaires suivantes :
- Transmission d'une position et/ou d'une orientation de l'appareil de commande (40) par rapport à l'installation industrielle (1) au dispositif serveur (60) pour permettre un affichage (103) du panneau virtuel (10),
- Déclenchement d'une activité relative au composant (2) au moyen d'une interaction par l'intermédiaire dudit au moins un élément interactif (15, 16, 17, 18) du panneau virtuel (10).
